# EUROPEAN PATENT SPECIFICATION

(11) **EP 1 819 180 B1**
(45) Date of publication and mention of the grant of the patent: **09.09.2015**
(21) Application number: 06024344.1
(22) Date of filing: 23.11.2006
(51) Int. Cl.: H04W 48/02, H04W 88/06

(54) **Controlling alternative communication pathway utilization in a mobile communication device**
Steuerung alternativer Kommunikationspfadnutzung in einer mobilen Kommunikationsvorrichtung
Commande de l'utilisation de voie de communication alternative dans un dispositif de communication mobile

(30) Priority: 13.02.2006 US 772789 P; 24.05.2006 US 440345
(43) Date of publication of application: 15.08.2007
(73) Proprietor: Broadcom Corporation, Irvine, CA 92617 (US)
(72) Inventor: Karaoguz, Jeyhan, 92606 Irvine CA (US); Seshadri, Nambirajan, 92612 Irvine CA (US)
(74) Representative: Jehle, Volker Armin

(56) References cited:
- WO-A1-2004/054215
- WO-A2-2005/081962
- US-A1- 2003 125 023
- US-A1- 2004 209 650

## Description

### [CROSS-REFERENCE TO RELATED APPLICATIONS]

The present application is related to and claims priority from U.S. Provisional Patent Application serial number 60/772,789, with attorney docket number 17055US01, filed February 13, 2006, and titled "CONTROLLING ALTERNATIVE COMMUNICATION PATHWAY UTILIZATION IN A MOBILE COMMUNICATION DEVICE.

### [FEDERALLY SPONSORED RESEARCH OR DEVELOPMENT]

[Not Applicable]

### [SEQUENCE LISTING]

[Not Applicable]

### [MICROFICHE/COPYRIGHT REFERENCE]

[Not Applicable]

### BACKGROUND OF THE INVENTION

In various communication business scenarios, a communication network provider (*e.g.*, to increase the customer base for the communication network) may subsidize costs associated with mobile communication devices that are compatible with the communication network. In such an exemplary scenario, the communication network provider may, for example, provide a mobile communication device to a customer at below cost, hoping to recuperate various up-front costs over time through future paid-for utilization of the communication network.

Some mobile communication devices may be capable of being communicatively coupled to more than one communication network. Such mobile communication devices may, in various configurations, allow a user to choose between a plurality of communication networks through which to communicate. Such a plurality of communication networks may each be managed by respective, and sometimes different, providers.

Further limitations and disadvantages of conventional and traditional approaches will become apparent to one of skill in the art, through comparison of such systems with the present invention as set forth in the remainder of the present application with reference to the drawings.

US 2003/125023 A1 describes a method and system for integrating data and voice services into a single session. Subscribers in a wireless communication network are communicatively linked to information sources in a data network via a gateway. The subscribers submit requests to voice service providers in the data network. A data and voice switching server effects integration of the data and voice services within the current session by suspending the data session, opening an integrating voice and data session and maintaining the integrated session by controlling and coordinating the functionality of an access provider switch, a gateway server, a remote access server, and a voice server.

Various aspects of the present invention provide a system and method for controlling alternative communication pathway utilization in a mobile communication device, substantially as shown in and/or described in connection with at least one of the figures, as set forth more completely in the claims.

According to the invention, there are provided a mobile communication device as defined by independent claim 1 and a method for controlling alternative communication pathway utilization as defined by independent claim 6.

Further advantageous features of the invention are defined by the dependent claims.

Advantageously, the telephone network is a cellular telephone network.

Advantageously, the computer network comprises the Internet.

Advantageously, the second type of communication comprises communicating voice conversation information.

Advantageously, the second type of communication comprises communicating multimedia conversation information.

Advantageously, the at least one module is adapted to disable the second type of communication by, at least in part, disabling at least one software module associated with the second type of communication.

Advantageously, the at least one module is adapted to disable the second type of communication by, at least in part, disabling at least one hardware module associated with the second type of communication.

Advantageously, the at least one module is adapted to disable the second type of communication by, at least in part, restricting flow of at least one type of information associated with the second type of communication.

Advantageously, the at least one module is further adapted to determine whether to enable or disable the second type of communication over the computer network.

Advantageously, the at least one module is adapted to determine whether to enable or disable the second type of communication over the computer network by, at least in part, accessing and analyzing stored information related to a user and/or the MCD.

Advantageously, the at least one module is further adapted to, prior to disabling the second type of communication:
enable the second type of communication over the computer network; and
determine to disable the second type of communication over the computer network.
Advantageously, the at least one module is further adapted to, prior to disabling the second type of communication:
perform the second type of communication over the computer network; and
log information regarding the performance of the second type of communication over the computer network.

Advantageously, the mobile communication device further comprises a user interface module, and wherein the at least one module is adapted to utilize the user interface module to provide an indication to a user of whether the second type of communication over the computer network is enabled.

Advantageously, the mobile communication device further comprises a user interface module, and wherein the at least one module is adapted to utilize the user interface module to provide information to a user indicating a manner in which the user may act to enable the second type of communication over the computer network.

Advantageously:
the at least one communication interface module is adapted to communicate a type of information other than voice conversation information over the computer network; and
the at least one module is adapted to enable communication of the type of information other than voice conversation information over the computer network, while the communication of voice conversation information over the computer network is disabled.

Advantageously, the at least one module is adapted to disable the communication of voice conversation information over the computer network by, at least in part, disabling a functional module of the MCD.

Advantageously, the at least one module is adapted to disable the communication of voice conversation information over the computer network by, at least in part, disabling a functional module of the MCD corresponding to VoIP communication.

Advantageously, the at least one module is further adapted to determine whether to enable or disable communication of voice conversation information over the computer network.

Advantageously, the at least one module is further adapted to, prior to disabling communication of voice conversation information over the computer network:
perform communication of voice conversation information over the computer network; and
log information regarding the communication of voice conversation information over the computer network.

Advantageously, the second type of communication comprises communicating voice conversation information.

Advantageously, disabling the second type of communication comprises disabling at least one software module associated with the second type of communication.

Advantageously, disabling the second type of communication comprises disabling at least one hardware module associated with the second type of communication.

Advantageously, the method further comprises determining whether to enable or disable the second type of communication over the computer network.

Advantageously, the method further comprises providing an indication to a user of whether the second type of communication over the computer network is enabled.

Advantageously, the method further comprises enabling communication of a type of information other than voice conversation information over the computer network, while the communication of voice conversation information over the computer network is disabled.

Advantageously, disabling communication of voice conversation information over the computer network comprises disabling a functional module of the MCD.

Advantageously, disabling communication of voice conversation information over the computer network comprises disabling a functional module of the MCD corresponding to VoIP communication.

Advantageously, the method further comprises determining whether to enable or disable communication of voice conversation information over the computer network.

These and other advantages, aspects and novel features of the present invention, as well as details of illustrative aspects thereof, will be more fully understood from the following description and drawings.

### BRIEF DESCRIPTION OF SEVERAL VIEWS OF THE DRAWINGS

Figure 1 is a block diagram illustrating a first exemplary mobile communication device adapted to control alternative communication pathway utilization, in accordance with various aspects of the present invention.

Figure 2 is a block diagram illustrating a second exemplary mobile communication device adapted to control alternative communication pathway utilization, in accordance with various aspects of the present invention.

Figure 3 is a block diagram illustrating a third exemplary mobile communication device adapted to control alternative communication pathway utilization, in accordance with various aspects of the present invention.

Figure 4 is an exemplary communication environment in which a mobile communication device incorporating various aspects of the present invention might operate.

Figure 5 is a flow diagram illustrating a first exemplary method for controlling alternative communication pathway utilization in a mobile communication device, in accordance with various aspects of the present invention.

Figure 6 is a flow diagram illustrating a second exemplary method for controlling alternative communication pathway utilization in a mobile communication device, in accordance with various aspects of the present invention.

### DETAILED DESCRIPTION

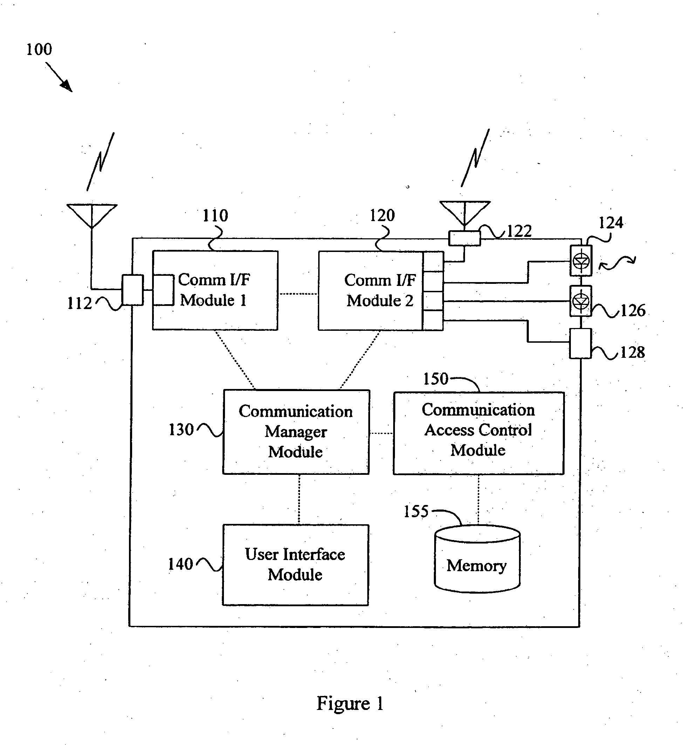

Figure 1 is a block diagram illustrating a first exemplary mobile communication device 100 adapted to control alternative communication pathway utilization, in accordance with various aspects of the present invention. The mobile communication device 100 may comprise characteristics of any of a variety of types of mobile communication devices. For example and without limitation, the mobile communication device may comprise characteristics of a cellular telephone, personal digital assistant, handheld computer, personal email device, portable music player with communication capability, portable navigation system, etc. Accordingly, the scope of various aspects of the present invention should not be limited by characteristics of any particular type of mobile communication device.

The exemplary mobile communication device 100 may comprise at least one communication interface module adapted to communicate over a plurality of communication networks. The mobile communication device 100 may, for example, comprise a first communication interface module 110 and a second communication interface module 120.

The first communication interface module 110 may, for example, be adapted to communicate over a first communication network. Such a first communication network may, for example, be or comprise various characteristics of a telephone communication network. Such a telephone communication network may, for example, be or comprise various characteristics of a cellular telephone network or the Public Switched Telephone Network ("PSTN"). In an exemplary configuration where the first communication interface module 110 is adapted to communicate over a cellular telephone network, the first communication interface module 110 may, for example, be adapted to communicate in accordance with any of a large variety of cellular communication standards and/or propriety communication protocols (*e.g.*, 1G, 2G, 3G, 4G, CDMA, WCDMA, PDC, TDMA, GSM/GPRS/EDGE, etc.).

The first communication interface module 110 may be adapted to communicate over any of a variety of communication media. For example, the first communication module 110 may be adapted to communicate wirelessly utilizing the antenna 112. Alternatively, for example, though not illustrated in Figure 1, the first communication interface module 110 may be adapted to communicate via wired interface, non-tethered optical interface or tethered optical interface.

The second communication interface module 120 may, for example, be adapted to communicate over a second communication network. Such a second communication network may, for example, be or comprise various characteristics of a computer communication network. In such an exemplary configuration, a computer communication network may, for example, be or comprise various characteristics of any of a variety of computer communication networks (*e.g.*, the Internet, a Wide Area Network "WAN," a Local Area Network "LAN," a Personal Area Network "PAN," a Metropolitan Area Network "MAN," a terrestrial computer communication network, a satellite computer communication network, etc.). Also, in such an exemplary configuration, the second communication interface module 120 may, for example, be adapted to communicate with the computer communication network utilizing any of a large variety of standard and/or proprietary protocols (*e.g.*, IEEE 802.3, IEEE 802.4, IEEE 802.5, IEEE 802.11, IEEE 802.15, IEEE 802.16, IEEE 802.20, etc.).

As with the first communication interface module 110, the second communication interface module 120 may be adapted to communicate over any of a variety of communication media. For example and without limitation, the second communication interface module 120 may be adapted to communicate via a wireless communication link (*e.g.* utilizing the antenna 112), via a wired communication link (*e.g.,* utilizing the wired communication port 128), via a non-tethered optical link (*e.g.*, utilizing the non-tethered optical port 124) or via tethered optical link (*e.g.*, utilizing the tethered optical port). Note that the first and second communication interface modules 110 and 120 are shown as distinct modules for illustrative clarity. In various implementations, such communication interface modules may share any or all components (*e.g.*, hardware and/or software components).

The exemplary mobile communication device 100 may also comprise a communication manager module 130 generally adapted to manage communications occurring with the mobile communication device 100. The communication manager module 130 may be or comprise characteristics of any of a large variety of modules or devices associated with performing general communication tasks in a mobile communication device. For example and without limitation, the communication manager module 130 may comprise or oversee operation of various signal processors, codecs, user interfaces, power amplifiers, applications, etc., which may be associated with any of the plurality of communication networks with which the mobile communication device 100 may be capable of communicating.

For example, the communication manager module 130 may be adapted to perform or manage various secure access and/or secure communication functionalities. Also for example, the communication manager module 130 may be adapted to perform or manage various power management functionalities. Additionally for example, the communication manager module 130 may be adapted to control user access to particular functionalities that the mobile communication device 100 is capable of performing.

Also for example, the communication manager module 130 may be adapted to perform or manage various flows of information within the mobile communication device 130. For example, the communication manager module 130 may be adapted to control the flow of information between various protocol stack layers. Also for example, the communication manager module 130 may be adapted to perform or manage the functionality of various protocol stack layers. The communication manager module 130 may thus be adapted to manage the flow of various types of information between various devices, modules or sub-modules. Such types of information may, for example, include control information, numerical information, textual information, audio information, video information, graphical information, pictorial information, etc.

The exemplary mobile communication device 100 may also comprise at least one user interface module 140. The user interface module 140 may generally provide an interface between the mobile communication device 100 and a user of the mobile communication device 100. The user interface module 140 may comprise characteristics of any of a variety of user interfaces. The user interface module 140 may, for example and without limitation, be adapted to provide any of a variety of audio, video and/or tactile user interfaces. For example and without limitation, the user interface module 140 may be adapted to provide video display, audio speaker, video camera, microphone, touch screen, touchpad, keypad and vibration U/I functionality.

For example, the mobile communication device 100 (*e.g.*, the communication manager module 130) may utilize the user interface module 140 to provide a communication interface (*e.g.*, video, audio and/or textual) between a user of the mobile communication device 100 and other devices communicatively coupled to the mobile communication device 100. For example, the mobile communication device 100 may utilize the user interface module 140 to notify a user of an incoming message to the mobile communication device 100 from another communication device (*e.g.*, another mobile communication device). Also for example, the mobile communication device 100 may utilize the user interface module 140 to provide a user interface for information communicated over various communication networks, where the user interface shares various characteristics with a typical mobile telephone user interface. As a non-limiting example, the mobile communication device 100 may utilize the user interface module 140, for communications between the mobile communication device 100 and another communication device over a computer communication network, to provide a user interface that is generally the same as the user interface for a mobile telephone communication over a mobile telephone communication network. The scope of various aspects of the present invention should not be limited by characteristics of a particular type of user interface or hardware and/or software that provide a particular type of user interface.

As will be discussed below, the user interface module 140 may be utilized by various other modules or sub-modules of the mobile communication device 100. For example, various other modules of the mobile communication device 100 may utilize the user interface module 140 to communicate information to a user regarding communication networks that are presently available for communication and/or various types of communication that may presently be performed over available communication networks. Additionally, various other modules of the mobile communication device 100 may utilize the user interface module 140 to communicate information to a user of the mobile communication device 100 indicating a manner in which the user may act to enable communication over a particular communication network and/or enable a particular type of communication. Such information may, for example, comprise contact information, payment information, user authentication information, exigency information, etc.

The exemplary mobile communication device 100 may also comprise a communication access control module 150 ("CACM") adapted to (i.e., comprise the appropriate hardware and/or software designed to) control access of the mobile communication device 100 to various communication networks and/or various types of communication over such networks. The CACM 150 may be implemented in any of a variety of manners. For example and without limitation, the CACM 150 may be implemented in hardware, software or any combination thereof (*e.g.*, application-specific integrated circuit, processor executing software instructions, etc.), or may be implemented in any of a variety of degrees of integration *(e.g.,* on one or more integrated circuits, independently or integrated with other functional modules or devices).

The following discussion will, at times, refer to various types of communication that may be performed over a communication network (*e.g.*, over a computer communication network). Examples of such various types of communication may, for example, comprise data file communication (*e.g.*, communicating various types of computer files like MP3 files, WAV files, MPEG files, word processor files, JPEG files, drawing files, software files, etc.), voice conversation communication (*e.g.*, substantially multi-way real-time voice communication between two or more parties), multimedia conversation communication (*e.g.*, substantially real-time multi-way multimedia communication between two or more parties), email communication, text message communication, one-way music streaming, one-way video streaming, radio broadcasting, television broadcasting, etc.

The following discussion will also, for example, refer to voice conversation communication *(e.g.,* the communication of voice conversation information). Such communication generally refers to the real-time (or substantially real-time) multi-way communication of voice information between conversing parties. The following discussion will additionally, for example, refer to multimedia conversation communication (*e.g.*, the communication of multimedia conversation information). Such communication generally refers to the real-time (or substantially real-time) multi-way communication of multimedia information between conversing parties.

The exemplary CACM 150 may, for example, be adapted to enable a first type of communication over a particular communication network and disable a second type of communication over the particular communication network. The CACM 150 may also, for example, be adapted to enable one or more particular types of communication or all communication over another particular communication network.

In a non-limiting exemplary scenario, the CACM 150 may be adapted to disable voice conversation communication over a particular communication network and enable various types of communication other than voice conversation communication over the particular communication network. In a non-limiting exemplary scenario where the particular communication network comprises a computer communication network (*e.g.*, the Internet), the voice conversation communication may correspond to Voice over Internet Protocol ("VoIP") communication, packet telephony, IP telephony, etc.). In such an exemplary scenario, the CACM 150 and/or a communication interface module 110, 120 may be capable of performing VoIP communication utilizing any of a variety of voice communication protocols (*e.g.*, ITU H.323, Session Initiation Protocol ("SIP"), Media Gateway Control Protocol/Media Gateway Controller ("MGCP/MEGACO"), etc.). In an additional non-limiting exemplary scenario, the CACM 150 may be adapted to disable multimedia conversation communication over a particular communication network and enable various types of communication other than multimedia conversation communication over a particular communication network.

In an exemplary scenario, there the CACM 150 is adapted to disable (or inhibit) a particular type of communication, the CACM 150 may be adapted to disable the particular type of communication in any of a variety of manners. For example and without limitation, the CACM 150 may be adapted to disable execution of at least one functional module (*e.g.*, at least one software and/or hardware module) associated with the disabled particular type of communication. For example, in a non-limiting exemplary scenario where the CACM 150 is adapted to disable voice conversation communication (*e.g*., VoIP communication over a computer network), the CACM 150 may be adapted to disable at least one functional module of the mobile communication device 100 that is related to voice conversation information (*e.g.*, VoIP communication over a computer network).

As a non-limiting example, in a configuration where the disabled type of communication is associated with a particular coder/decoder ("codec"), the CACM 150 may be adapted to disable operation of the codec. Note that codecs may be implemented in hardware, software or a combination thereof. Also for example, the CACM 150 may be adapted to disable the flow of particular information to and/or from the codec.

As another non-limiting example, in a configuration where the disabled type of communication is associated with a particular software application (or software module), the CACM 150 may be adapted to disable execution of the particular application (or software module) or prevent loading (*e.g*., downloading) the application (or software module) into the mobile communication device 100.

As yet another non-limiting example, in a configuration where the disabled type of communication is associated with utilization of a particular communication interface port, data processor, data translator or data transcoder, the CACM 150 may be adapted to disable, or at least restrict, operation of the particular communication interface port, data processor, data translator or data transcoder.

As still another non-limiting example, in a configuration where the disabled type of communication is associated with utilization of a particular user interface device (*e.g.*, a microphone, camera or other input device, or a speaker, video display or other output device), the CACM 150 may be adapted to disable, or at least restrict, operation of the particular user interface device.

In another non-limiting exemplary configuration where the disabled type of communication is associated with a particular information flow in the mobile communication device 100 (*e.g.*, a flow of audio signals from a microphone and/or related amplifier to an encoder or a flow of audio signals from a decoder and/or related amplifier to a speaker), the CACM 150 may be adapted to inhibit the flow of such information between various hardware and/or software modules of the mobile communication device 100. For example, the CACM 150 may be adapted to inhibit the flow of such information between and/or within various protocol stack layers (*e.g.*, between an application layer and transport layer, between a transport and network layer, between a network and data link layer or between a data link layer and a physical layer).

In some exemplary scenarios, the CACM 150 may be adapted to always disable or enable particular types of communication and/or communication over particular communication networks. In other exemplary scenarios, the CACM 150 may be adapted to sometimes disable or enable particular types of communication and/or communication with particular communication networks. As another non-limiting example, the CACM 150 may be adapted to determine whether to enable or disable a particular type of communication (*e.g.*, voice conversation communication) over a computer network.

The CACM 150 may be adapted to determine whether to enable or disable a particular type of communication in any of a variety of manners. For example and without limitation, the CACM 150 may be adapted to determine whether to enable or disable a particular type of communication by accessing and analyzing stored information related to the mobile communication device 100 and/or a user thereof. Such information may be stored in memory onboard the mobile communication device 100 (*e.g.*, a memory 155), or such information may be stored in a memory or database remote from the mobile communication device 100. Such onboard memory may comprise characteristics of any of a variety of onboard memory devices (*e.g.*, a SIM card, permanent or removable flash memory or other type of non-volatile solid state memory, disk storage, etc.).

In an exemplary scenario where such information is stored remotely from the mobile communication device 100, the CACM 150 may be adapted to utilize a communication interface module of the mobile communication device 100 (*e.g.,* the first communication interface module 110, second communication interface module 120 or other communication interface module) to access such stored information. For example, the CACM 150 may be adapted to utilize a communication interface module of the mobile communication device 100 to access a central server comprising various mobile communication device and/or user information.

In a scenario involving the CACM 150 accessing and analyzing stored mobile communication device 100 or user information, such information may comprise any of a variety of characteristics. For example and without limitation, such information may comprise information related to mobile communication device and/or user access privileges to particular communication networks or types of communication. Also for example, such information may comprise information related to prior utilization of a particular type of communication (*e.g*., where the mobile communication device 100 or a user thereof is allowed a particular amount of utilization of a particular type of communication).

In a non-limiting exemplary scenario, the mobile communication device 100 (*e.g.*, the CACM 150) may be adapted to allow (actively or passively) unlimited access to cellular telephony through a cellular communication network. Continuing the exemplary scenario, the mobile communication device 100 *(e.g.,* the CACM 150) may be adapted to allow access to voice (or multimedia) conversation communication over a computer network for a particular amount of minutes per month, after which such access is disabled. Still continuing the exemplary scenario, the mobile communication device 100 (*e.g.*, the CACM 150) may be adapted to enable access to email, text messaging, web surfing, music downloading and other types of communication other than voice conversation communication.

In such an exemplary scenario, the CACM 150 may also be adapted to monitor utilization of the mobile communication device 100 and store (or log) information related to prior utilization of the mobile communication device 100. As a non-limiting example, the CACM 150 may be adapted to monitor an amount of time that the mobile communication device 100 (or particular user thereof) communicates voice conversation information (as a non-limiting example of a type of communication) over a computer network *(e.g.,* VoIP communication). The CACM 150 may then access such information related to prior communication when determining whether to enable or disable further voice conversation communication over the computer network. Such monitoring may also, for example, be performed with regard to monitoring an amount of information communicated.

The CACM 150 may, for example, be adapted to determine whether to enable or disable a particular type of communication by analyzing communication conditions associated with a particular communication network or type of communication. As a non-limiting example, the CACM 150 may be adapted to generally disable voice (or multimedia) conversation communication over a computer network unless available bandwidth in a cellular communication system drops below a particular level. As another non-limiting example, the CACM 150 may be adapted to generally disable voice conversation communication over a computer network unless the cellular communication network is unavailable or not available to a degree commensurate with providing at least a particular minimum quality of service.

The user interface module 140 was generally discussed previously. The CACM 150 may be adapted to interface with and/or utilize the user interface module 140 in any of a variety of manners. For example and without limitation, as discussed previously, the CACM 150 may be adapted to control information flow to and/or from various portions of the user interface module 140 associated with particular types of communication. Also for example, as discussed previously, the CACM 150 may be adapted to enable and/or disable various portions of the user interface module 140 associated with particular types of communication.

The CACM 150 may also be adapted to utilize the user interface module 140 to interface with a user regarding access to communicating over various communication networks and/or utilizing various types of communication. For example and without limitation, the CACM 150 may be adapted to utilize the user interface module 140 to provide an indication to the user of whether a particular communication network and/or particular type of communication is enabled for the mobile communication device 100 and/or the user. Such an indication may comprise any of a variety of characteristics *(e.g.,* visible and/or audible). For example, an indication may comprise characteristics of a graphical icon, visible list, menu item, particular color and/or intensity, etc.

In a non-limiting exemplary scenario, the CACM 150 may be adapted to utilize the user interface module 140 to provide a visual *(e.g.,* graphical) indication to the user to inform the user that communication with a computer network has been established but that voice conversation communication over the computer network is disabled. In another non-limiting exemplary scenario, the CACM 150 may be adapted to utilize the user interface module 140 to provide a visual indication to the user that multimedia conversation communication over the computer network is not available, but that email or instant text message communication over the computer network is available. In yet another non-limiting exemplary scenario, the CACM 150 may be adapted to utilize the user interface module 140 to provide a visual indication to the user that cellular telephony is presently unavailable (or unavailable at a particular level of quality) but that VoIP communication is presently available.

Also for example and without limitation, the CACM 150 may be adapted to utilize the user interface module 140 to provide an indication to the user indicating a manner in which the user may act to enable a particular presently disabled type of communication. In a non-limiting exemplary scenario, the CACM 150 may be adapted to utilize the user interface module 140 to provide an indication to a user informing the user that voice conversation communication over a computer network is not presently available. Continuing the exemplary scenario, the CACM 150 may also be adapted to utilize the user interface module 140 to provide information to the user indicating a manner in which the user may gain access to voice conversation communication over the computer network. Such information may, for example, comprise purchasing information. The CACM 150 may also, for example, manage handshaking with the user through the user interface module 140 to perform steps necessary for the user to gain access to a presently disabled communication network or type of communication.

The exemplary mobile communication device 100 was presented to provide non-limiting exemplary illustrations of various aspects of the present invention. Accordingly, the scope of various aspects of the present invention should not be limited by particular characteristics of the exemplary mobile communication device 100.

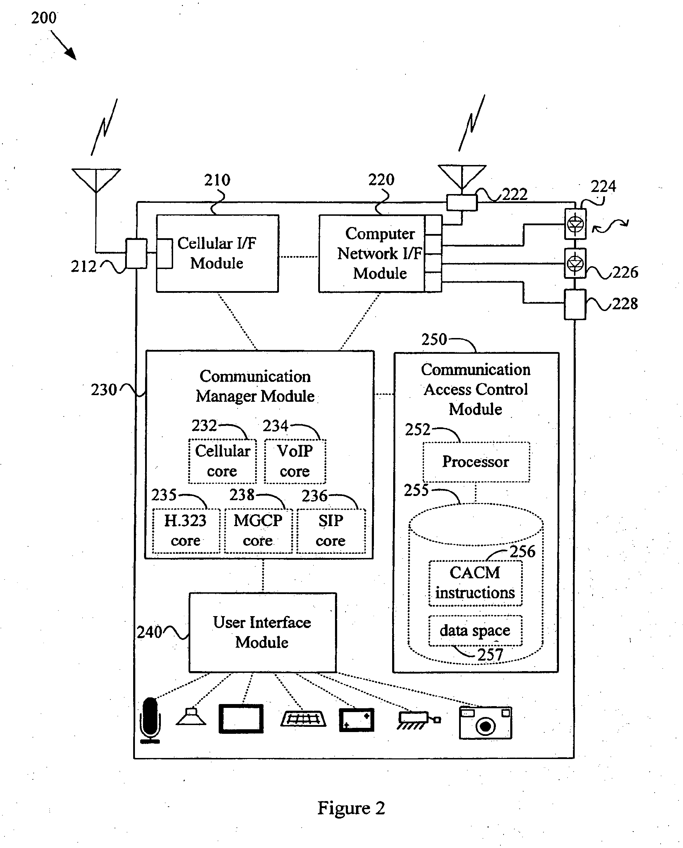

Figure 2 is a block diagram illustrating a second exemplary mobile communication device 200 adapted to control alternative communication pathway utilization, in accordance with various aspects of the present invention. The exemplary communication device 200 illustrated in Figure 2 may share any or all characteristics with the exemplary communication device 100 illustrated in Figure 1 and discussed previously.

For example, the cellular communication interface module 210 and computer network communication interface module 220 may share any or all characteristics with the first communication interface module 110 and second communication interface module 120 illustrated in Figure 1 and discussed previously. The cellular communication interface module 210 may, for example, be adapted to establish and utilize communication links with a cellular telephone network (*e.g.*, utilizing any of a variety of cellular communication protocols, some of which were mentioned previously). The computer network communication interface module 220 may, for example, be adapted to establish and utilize communication links with a computer network (*e.g*., utilizing any of a variety of computer network communication protocols, some of which were mentioned previously).

The exemplary communication device 200 may comprise a communication manager module 230 generally adapted to manage communications occurring with the mobile communication device 200. The communication manager module 230 may share any or all characteristics with the exemplary communication manager module 130 illustrated in Figure 1. The communication manager module 230 may comprise characteristics of any of a large variety of modules or devices associated with performing general communication tasks in a mobile communication device.

The communication manager module 230 may also comprise characteristics of any of a large variety of modules or devices associated with performing specific communication tasks associated with particular types of communication. As non-limiting examples, the communication manager module 230 is illustrated comprising a cellular core 232, VoIP core 234, H.323 core 235, SIP core 236 and MGCP/MEGACO core 238. Each of such cores may be implemented in hardware, software or various combinations thereof. The cellular core 232 may, for example, be adapted to perform any of a variety of types of signal processing associated with one or more particular types of cellular communication. The VoIP core 234 may, for example, be adapted to perform any of a variety of types of signal processing (*e.g.*, encoding/decoding, translating, etc.) associated with VoIP communication. The H.323 core 235 may be adapted to perform any of a variety of types of signal processing associated with the ITU H.323 protocol. The SIP core 236 may, for example, be adapted to perform any of a variety of types of signal processing associated with the Session Initiation Protocol. The MGCP/MEGACO core 238 may, for example, be adapted to perform any of a variety of types of signal processing associated with the MGCP and/or MEGACO protocols.

The exemplary mobile communication device 200 may also comprise one or more user interface module(s) 240 and a communication access control module ("CACM") 250, which may share any or all characteristics with the exemplary user interface module(s) 140 and CACM 150 illustrated in Figure 1 and discussed previously.

As mentioned previously in the discussion of the exemplary CACM 150 of Figure 1, the CACM 250 may be implemented in any of a variety of hardware and/or software implementations. As illustrated in Figure 2, at least a portion of the functionality of the CACM 250 may be implemented by a processor 252 executing software instructions 256 stored in a memory 255. The memory 255 may also, for example, comprise data space 257, which may comprise information related to any of a variety of processing tasks (*e.g.*, user and/or mobile communication device profile information). The data space 257 may, for example, comprise information related to user access privileges and/or mobile communication device capabilities.

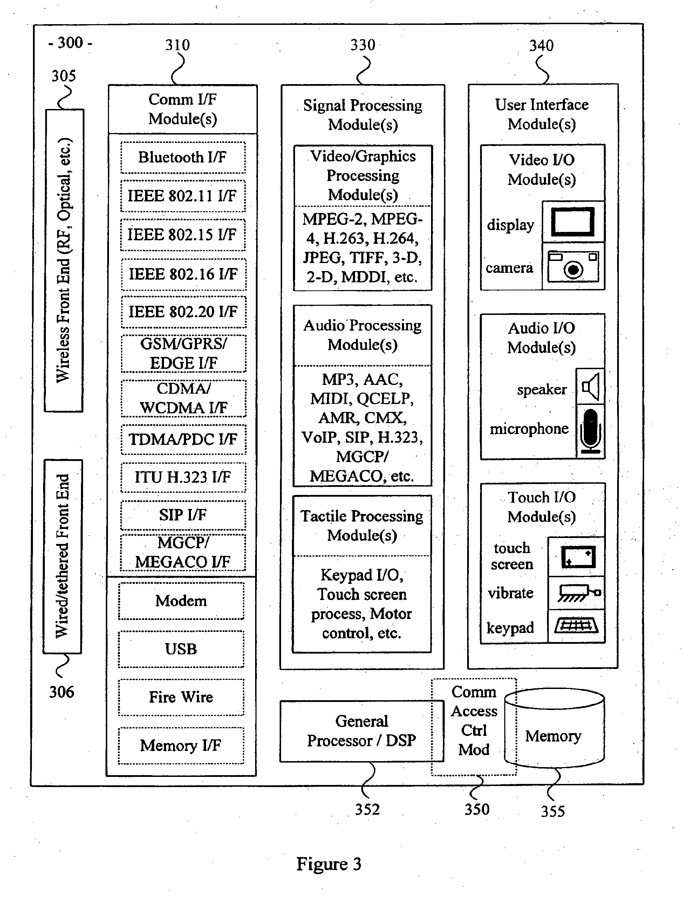

Figure 3 is a block diagram illustrating a third exemplary mobile communication device 300 adapted to control alternative communication pathway utilization, in accordance with various aspects of the present invention. The exemplary mobile communication device 300 may, for example, share any or all characteristics with the exemplary mobile communication devices 100 and 200 illustrated in Figures 1-2 and discussed previously.

The exemplary mobile communication device 300 may comprise a wireless front end 305 and/or a wired/tethered front end 306. The wireless front end 305 and the wired/tethered front end 306 may be communicatively coupled to any of a variety of communication interface modules 310. The exemplary mobile communication device 300 is illustrated with a non-limiting exemplary set of communication interface modules 310, including: a Bluetooth interface module, IEEE 802.11 interface module, IEEE 802.15 interface module, IEEE 802.16 interface module, IEEE 802.20 interface module, GSM/GPRS/EDGE interface module, CDMA/WCDMA interface module, TDMA/PDC interface module, ITU H.323 interface module, SIP interface module, MGCP/MEGACO interface module, modem module, USB module, fire wire module and memory interface module (*e.g.,* for interfacing with off-board or removable memory). The wireless front end 305, wired/tethered front end 306 and communication interface modules 310 may, for example and without limitation, share various characteristics with the communication interface module(s) 110, 120, 210 and 220 of the exemplary mobile communication devices 100, 200 illustrated in Figures 1-2 and discussed previously.

The exemplary mobile communication device 300 may also comprise any of a variety of user interface module(s) 340. The user interface module(s) 340 may, for example and without limitation, share various characteristics with the user interface module(s) 140, 240 of the exemplary mobile communication devices 100, 200 illustrated in Figures 1-2 and discussed previously. The exemplary mobile communication device 300 is illustrated with a non-limiting exemplary set of user interface module(s) 340 (or sub-modules). The user interface module(s) 340 may, for example, comprise any of a variety of video/graphics processing modules, audio processing modules, and tactile signal processing modules. The mobile communication device 300 may also comprise compatible user interface devices corresponding to the various user interface module(s) 340 (*e.g*., a video display, camera, speaker, microphone, touch screen, keypad, vibrator, etc.).

The exemplary mobile communication device 300 is illustrated with a non-limiting exemplary set of signal processing modules 330, which may be selectively utilized in accordance with current signal processing needs. The signal processing modules 330 may, for example, comprise various video, audio, textual and tactile signal-processing modules. The signal processing modules 330 may generally, for example, process information conveyed between the front ends 305, 306 and communication interface module(s) 310 of the mobile communication device 300 and the user interface module(s) 340 of the mobile communication device 300.

The signal processing modules 330 may, for example and without limitation, comprise various video/graphics processing modules, various audio processing modules (*e.g.,* VoIP processing modules) and various tactile processing modules. The signal processing modules 330 may, for example, share any or all characteristics with the communication manager modules 130, 230 illustrated in Figures 1-2 and discussed previously.

The exemplary mobile communication device 300 may also comprise a general processor 352 (and/or a digital signal processor) and on-board memory 355. The general processor 352, which may be a baseband processor for example, and memory 355 may perform any of a wide variety of operational tasks for the mobile communication device 300. For example and without limitation, the general processor 352 and memory 355 may share various characteristics with the communication interface modules 120, 220, processor 252 and memories 155, 255 of the exemplary mobile communication devices 100 and 200 illustrated in Figures 1-2 and discussed previously.

The exemplary mobile communication device 300 may also comprise a communication access control module ("CACM") 350, which may share any or all characteristics with the exemplary communication access control modules 150 and 250 illustrated in Figures 1-2 and discussed previously. The communication access control module 350 may, for example, be implemented in any of a variety of manners, including, for example, by the general processor 352 executing software instructions stored in the memory 355.

The exemplary mobile communication device 300 was presented to provide specific illustrations of various generally broader aspects of the present invention. Accordingly, the scope of various aspects of the present invention should not be limited by particular characteristics of the exemplary mobile communication device 300.

It should be noted that various modules of the previously discussed exemplary mobile communication devices 100-300 may be implemented in hardware, software, or a combination thereof. Also, various modules may share portions of hardware and/or software. For example, a first and second module may share one or more hardware components and/or one or more software subroutines. Accordingly, the scope of various aspects of the present invention should not be limited by characteristics of any particular hardware or software implementation of the various modules or by arbitrary hardware and software boundaries between the various modules.

Further, the various modules of the exemplary mobile communication devices 100-300 may be implemented in various degrees of integration. For example and without limitation, the modules may all be integrated on a single chip. Also for example, the various modules may be implemented in separate chips of a single circuit board. Accordingly, the scope of various aspects of the present invention should not be limited by characteristics of any particular implementation or level of integration of the various exemplary modules.

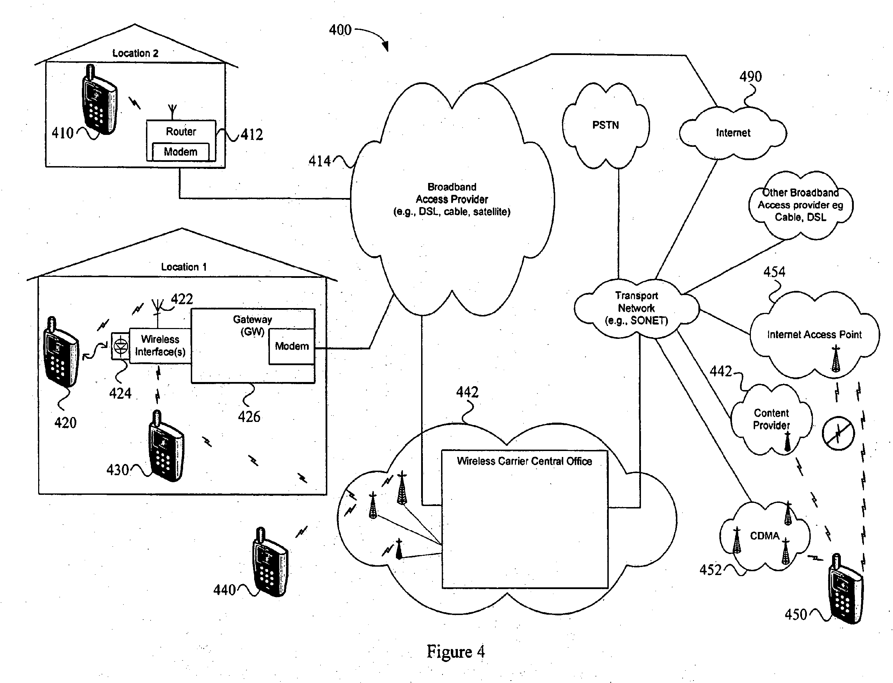

Figure 4 is an exemplary communication environment 400 in which a mobile communication device incorporating various aspects of the present invention might operate. The exemplary communication environment 400 shows a variety of exemplary mobile communication devices 410, 420, 430, 440 and 450 in various respective communication scenarios. The exemplary mobile communication devices 410, 420, 430, 440 and 450 may, for example, share any or all characteristics with the exemplary mobile communication devices 100, 200 and 300 illustrated in Figures 1-3 and discussed previously.

In a first exemplary scenario, a first mobile communication device 410 may be enabled to perform voice conversation communication through a computer communication network (*e.g.*, through a router and modem 412 coupled to the Internet 490 through a broadband access provider 414). The first mobile communication device 410 may, for example, be enabled to perform voice conversation communication through a computer communication network because of the unavailability of adequate cellular communication coverage at Location 2.

In a second exemplary scenario, a second mobile communication device 420 may be enabled to perform voice conversation communication through a computer communication network (*e.g.*, through an optical 424 and/or wireless RF 422 interface coupled to the Internet 490 through a gateway and modem 426. The second mobile communication device 420 may, for example, be so enabled because the second mobile communication device 420 is presently located in a cellular dead zone within Location 1.

In a third exemplary scenario, a third mobile communication device 430 may be enabled to perform voice conversation communication through a computer communication network and through a cellular network 442. The third mobile communication device 430 may, for example, be so enabled until a particular amount of voice conversation communication has been performed over the computer communication network, at which point the third mobile communication device 430 might only be enabled to communicate voice conversation communication through a cellular network 442.

In a fourth exemplary scenario, a fourth mobile communication device 440 may be enabled to perform voice conversation communication only with a cellular communication network 442.

In a fifth exemplary scenario, a fifth mobile communication device 450 may be enabled to perform voice conversation communication with a cellular communication network 452, receive audio and/or video streaming from a content provider 453, and perform types of communication other than voice conversation communication over the Internet 490 (*e.g.*, through an Internet access provider 454). For example, the fifth mobile communication device 450 may be enabled to communicate email information and general web surfing information with the Internet access point 454, but not VoIP information.

Though the previous communication environment 400 was presented in the context of enablement and disablement of voice conversation communication, the scope of various aspects of the present invention should not be limited by characteristics of voice conversation communication. For example, various aspects of the present invention also apply to multimedia conversation communication and other types of communication discussed previously.

The exemplary mobile communication devices 100, 200, 300, 410, 420, 430, 440 and 450 presented in Figures 1-4 were presented to provide non-limiting exemplary illustrations of various aspects of the present invention. Accordingly, the scope of various aspects of the present invention should not be limited by characteristics of the exemplary mobile communication devices 100, 200, 300, 410, 420, 430, 440 and 450.

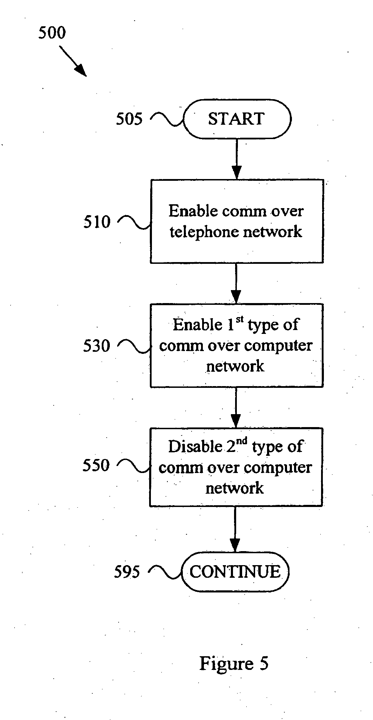

Figure 5 is a flow diagram illustrating a first exemplary method 500 for controlling alternative communication pathway utilization in a mobile communication device, in accordance with various aspects of the present invention. The exemplary method 500 may share any or all functional characteristics with the exemplary mobile communication devices 100, 200, 300, 410, 420, 430, 440 and 450 (*e.g.*, communication access control modules or other modules thereof) illustrated in Figures 1-4 and discussed previously. As discussed previously, the mobile communication device may comprise characteristics of any of a variety of mobile communication devices. For example, the mobile communication device may be capable of performing one or more types of communication over a plurality of communication networks. As a non-limiting example, the mobile communication device may be capable of communicating voice conversation information over a cellular telephone network and over a computer network.

The exemplary method 500 may begin executing at step 505. The exemplary method 500 may begin executing for any of a variety of reasons. For example and without limitation, the exemplary method 500 may begin executing on power-up or reset of a mobile communication device implementing the method 500. Also for example, the exemplary method 500 may begin executing in response to a detected communication condition or event (*e.g.*, logged amount of usage, detected communication quality, determined communication bandwidth availability, detected power supply condition, determined communication network availability, determined user access privileges, etc.).

The exemplary method 500 may, at step 510, comprise enabling communication over at least a first communication network. The first communication network may, for example, comprise characteristics of a telephone communication network (*e.g.*, a cellular telephone communication network and/or the PSTN). For example, step 510 may comprise enabling voice conversation communication (or multimedia conversation communication) over a cellular telephone network. Various non-limiting examples of such first communication networks and/or various types of communication were presented previously (*e.g.*, in the discussion of Figure 1).

The exemplary method 500 may, at step 530, comprise enabling a first type of communication of a plurality of types of communication over a second communication network (*e.g.*, a computer network). Various examples of types of communication and enabling such types of communication over a second communication network *(e.g.,* a computer network) were presented previously *(e.g.,* in the discussion of Figure 1).

For example and without limitation, step 530 may comprise enabling a first type of communication of a plurality of types of communication over a computer network. Such a computer network may, for example, comprise the Internet, a WAN, a MAN, a LAN, a PAN, etc.). Note that step 530 may comprise enabling such communication by enabling such communication utilizing any of a variety of communication protocols (*e.g.*, wired and/or wireless communication protocols). In a non-limiting exemplary scenario, step 530 may comprise enabling one or more various types of communication other than voice conversation communication over the computer network.

The exemplary method 500 may, at step 550, comprise disabling a second type of communication of the plurality of types of communication over the second communication network. For example, step 550 may comprise disabling one or more particular types of communication over a computer network. Various exemplary characteristics of computer networks were discussed previously. As a non-limiting example, step 550 may comprise disabling voice conversation communication over a computer network *(e.g.,* VoIP communication). As another non-limiting example, step 550 may comprise disabling multimedia conversation communication over a computer network.

Similar to functionality discussed previously with regard to the communication access control modules of the exemplary mobile communication devices, step 550 may comprise disabling the second type of communication in any of a variety of manners. For example and without limitation, step 550 may comprise disabling at least one functional module (*e.g.*, a software and/or hardware module) associated with the second type of communication. Such functional modules may, for example, comprise characteristics of various encoders, decoders, codecs, gateway translators, transcoders, communication ports, signal processing cores, etc.). In a non-limiting exemplary scenario, step 550 may comprise disabling hardware and/or software associated with a VoIP codec or other functional module associated with voice conversation communication. In another non-limiting exemplary scenario, step 550 may comprise disabling the execution and/or downloading of particular software applications or portions thereof.

Also for example, step 550 may comprise disabling (or restricting) flow of a particular type of information associated with the second type of communication. For example and without limitation, step 550 may comprise disabling flow of voice conversation information from a microphone to a network communication module. As another example, step 550 may comprise disabling the flow of multimedia conversation information from a microphone and/or camera to a layer in a communication protocol stack (*e.g.*, between application and network protocol stack layers).

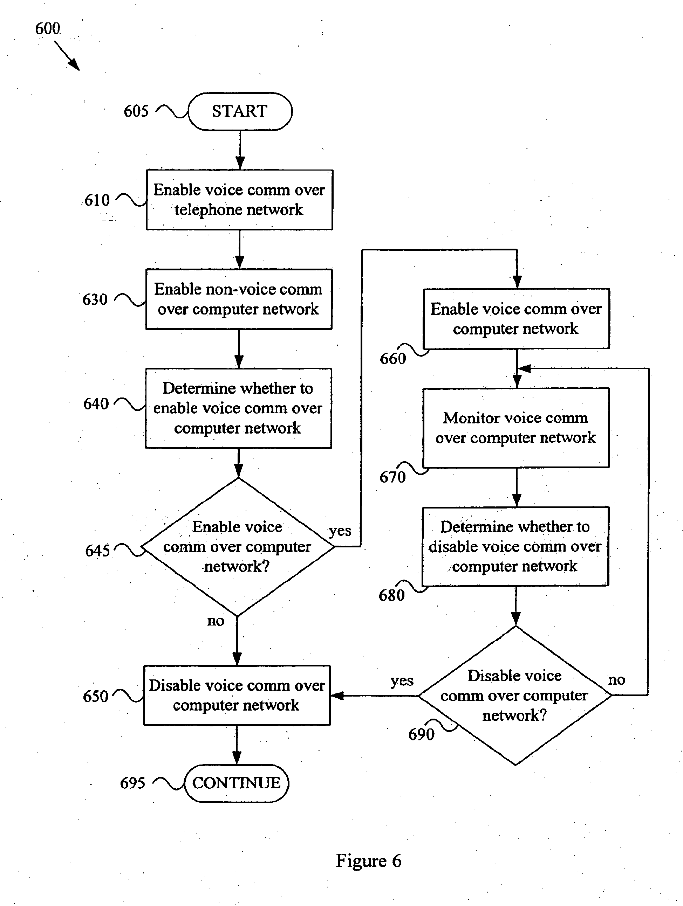

The exemplary method 500 may, at step 595, comprise performing continued processing. Such continued processing may comprise any of a variety of continued processing activities, some of which have been exemplified in the previous discussion of Figures 1-4, and some of which will be presented in the following discussion of Figure 6. For example and without limitation, such continued processing may comprise characteristics of enabling and performing various types of communication, monitoring such various types of communication, redetermining whether to enable or disable such types of communication, etc.

Also for example, step 595 may comprise performing various user interface activities. For example, step 595 may comprise providing an indication to a user of whether a particular type of communication is presently available. For example, step 595 may comprise outputting an indication to a user notifying the user that voice conversation communication over a computer network is presently available or unavailable. Also for example, in a non-limiting exemplary scenario, where a particular type of communication is presently unavailable, step 595 may comprise outputting information to a user notifying the user of a manner in which the user may act to have the particular type of communication made available.

Figure 6 is a flow diagram illustrating a second exemplary method 600 for controlling alternative communication pathway utilization in a mobile communication device, in accordance with various aspects of the present invention. The exemplary method 600 may share any or all functional characteristics with the exemplary mobile communication devices 100, 200, 300, 410, 420, 430, 440 and 450 (*e.g.*, communication access control modules or other modules thereof) illustrated in Figures 1-4 and discussed previously. Also, the exemplary method 600 may share any or all characteristics with the exemplary method 500 illustrated in Figure 5 and discussed previously. As discussed previously, a mobile communication device may comprise characteristics of any of a variety of mobile communication devices. For example, the mobile communication device may be capable of performing one or more types of communication over a plurality of communication networks. As a non-limiting example, the mobile communication device may be capable of communicating voice conversation information over a cellular telephone network and over a computer network.

The exemplary method 600 may begin executing at step 605. The exemplary method 600 may, at step 610, comprise enabling communication over at least a first communication network. The first communication network may, for example, comprise characteristics of a telephone communication network (*e.g.*, a cellular telephone network). The exemplary method 600 may, at step 630, comprise enabling a first type of communication of a plurality of types of communication over a second communication network (*e.g.*, enabling communication other than voice conversation communication over a computer network). Various examples of types of communication and enabling such types of communication over a second communication network (*e.g.*, a computer network) were presented previously (*e.g.*, in the discussion of Figure 1). Exemplary steps 605, 610 and 630 may, for example and without limitation, share any or all characteristics with steps 505, 510 and 530 of the exemplary method 500 illustrated in Figure 5.

The exemplary method 600 may, at step 640, comprise determining whether to enable or disable the second type of communication over the second communication network. For example, in a non-limiting exemplary scenario, step 640 may comprise determining whether to enable voice conversation communication over a computer network.

Step 640 may comprise determining whether to enable or disable the second type of communication in any of a variety of manners, non-limiting examples were presented previously (*e.g.*, in the discussion of Figure 1). For example and without limitation, step 640 may comprise determining whether to enable or disable the second type of communication over the second communication network by, at least in part, accessing and analyzing stored information related to the user and/or the mobile communication device. For example, step 640 may comprise accessing and analyzing user or mobile communication device profile information (*e.g.*, user or device access privileges, etc.).

In an exemplary scenario where step 640 comprises accessing stored information, step 640 may comprise accessing user or mobile communication device information that is stored on-board the mobile communication device (*e.g.*, in a SIM card, general non-volatile memory, hard drive, etc.). Also for example, step 640 may comprise accessing information that is stored in storage remote from the mobile communication device (*e.g.*, on a central database) over a communication network.

In an exemplary scenario where step 640 comprises analyzing stored information, such information may comprise any of a variety of types of information. For example and without limitation, such information may comprise information of user or mobile communication device access privileges. Such information may also, for example, comprise information regarding an amount of a particular type of communication that is allowed for a particular user or mobile communication device. Such information may further, for example, comprise information of a monitored (or logged) amount of the second type of communication that has been previously performed. As a non-limiting example, a particular user may be allocated a particular amount of voice conversation communication over a computer communication network (*e.g.*, per month). Such information may still further, for example, comprise information related to available communication quality, power availability, communication bandwidth availability, etc.

The exemplary method 600 may, at step 645, comprise directing execution flow of the exemplary method 600. If it was determined at step 640 that a particular type of communication should be enabled, then step 645 may comprise directing execution flow of the exemplary method 600 to step 660. If, however, it was determined at step 640 that a particular type of communication should be disabled, then step 645 may comprise directing execution flow of the exemplary method 600 to step 650.

The exemplary method 600 may, at step 650, comprise disabling the second type of communication over the second communication network. For example, in a non-limiting exemplary scenario, step 650 may comprise disabling voice conversation communication (or, *e.g.*, multimedia conversation information). Step 650 may comprise disabling the second type of communication over the second communication network in any of a variety of manners, various examples of which were presented previously in the discussion of Figures 1-5 (*e.g.*, step 550 and/or various functionality of the exemplary communication access control modules).

The exemplary method 600 may, at step 660, comprise enabling the second type of communication over the second communication network. In a non-limiting exemplary scenario, step 660 may comprise enabling voice conversation information (*e.g.*, VoIP communication) over a computer network. Step 660 may comprise enabling the second type of communication in any of a variety of manners, various non-limiting examples of which were discussed previously. For example and without limitation, step 660 may comprise enabling various hardware and/or software and/or information flows associated with the second type of communication.

The exemplary method 600 may, at step 670, comprise monitoring performance of the second type of communication over the second communication network. In a non-limiting exemplary scenario, step 670 may comprise monitoring performance of previously enabled voice conversation communication over a computer network. Various exemplary aspects of such monitoring, which may include information logging, were presented previously (*e.g.*, in the discussion of Figure 1). For example, step 670 may comprise monitoring and logging an amount of the second type of communication performed by the mobile communication device or a user thereof (*e.g.*, minutes of usage). Other types of information that may be monitored and/or logged (*e.g.*, for later analysis) may include communication environment conditions, quality of service measurements, amount of data communicated, communication bandwidth utilization, etc.

The exemplary method 600 may, at step 680, comprise determining whether to disable the second type of communication (*e.g.*, based, at least in part, on the communications monitored at step 670). Step 680 may, for example and without limitation, share any or all characteristics with step 640 discussed previously.

The exemplary method 600 may, at step 690, comprise controlling execution flow of the exemplary method 600. For example, if it is determined at step 680 to disable the second type of communication over the second communication network (*e.g.*, disable voice or multimedia conversation communication over a computer network), step 690 may comprise directing execution flow of the method 600 to step 650 to perform such disablement. Also for example, if it is determined at step 680 not to disable the second type of communication over the second communication network, step 690 may comprise directing execution flow of the exemplary method 600 back up to step 670 for continued monitoring and enablement determination.

The exemplary method 600 may, at step 695, comprise performing continued processing activities. Various non-limiting examples of such continued processing activities (*e.g.*, user interface activities) were presented previously.

The exemplary methods 500, 600 illustrated in Figures 5-6 were presented to provide non-limiting exemplary illustrations of various functional aspects of the present invention. Accordingly, the scope of various aspects of the present invention should not be limited by characteristics of the exemplary methods 500, 600.

Various aspects of the present invention have also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claimed invention.

Various aspects of the present invention have additionally been described above with the aid of functional building blocks illustrating the performance of certain significant functions. The boundaries of these functional building blocks and relationships between various functional building blocks have been arbitrarily defined for convenience of description. Alternate boundaries or relationships could be defined as long as the certain significant functions are appropriately performed. Such alternate boundaries or relationships are thus within the scope of the claimed invention. Additionally, the functional building blocks, and other illustrative blocks, modules and components herein, can be implemented as illustrated or by discrete components, application specific integrated circuits, processors executing appropriate software and the like or any combination thereof.

In summary, various aspects of the present invention provide a system and method for controlling alternative communication pathway utilization in a mobile communication device. While the invention has been described with reference to certain aspects and embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A mobile.communication device MCD (100, 200, 300, 410, 420, 430, 440, 450) comprising:
at least one communication interface module (110, 120, 210, 220) adapted to:
communicate over at least a telephone network and a computer network; and
perform a plurality of types of communication over the computer network; and
at least one module (150, 250, 350) adapted to:
enable a first type of communication of the plurality of types of communication over the computer network; and
disable a second type of communication of the plurality of types of communication over the computer network,
- wherein the at least one module is further adapted to determine whether to enable or disable the second type of communication over the computer network by, at least in part, accessing and analyzing stored information related to a user and/or the MCD.

2. The mobile communication device of claim 1, wherein the telephone network is a cellular telephone network (442, 452).

3. The mobile communication device of claim 1, wherein the computer network comprises the Internet (490).

4. The mobile communication device of claim 1, wherein the second type of communication comprises communicating voice conversation information.

5. The mobile communication device of claim 1, wherein said
at least one communication interface module adapted to communicate over at least said telephone network and said computer network further comprises said at least one communication interface module adapted to communicate voice conversation information over at least said telephone network and said computer network, wherein said telephone network is a cellular telephone network (442, 452);
said at least one module is adapted to:
enable the communication of voice conversation information over the cellular telephone network, wherein said second type of communication over the computer network is said voice conversation information; and
said at least one communication interface module is adapted to communicate a type of information other than voice conversation information over the computer network, wherein said first type of communication over the computer network is said type of information other than voice conversation information.

6. In a mobile communication device MCD (100, 200, 300, 410, 420, 430, 440, 450), the MCD capable of communicating over at least a telephone network and a computer network, the MCD capable of performing a plurality of types of communication over the computer network, a method for controlling alternative communication pathway utilization, the method comprising:
enabling a first type of communication of the plurality of types of communication over the computer network; and
disabling a second type of communication of the plurality of types of communication over the computer network,
wherein the method further comprises determining whether to enable or disable the second type of communication over the computer network by, at least in part, accessing and analyzing stored information related to a user and/or the MCD.

7. The method of claim 6, wherein the second type of communication comprises communicating voice conversation information.

## Patentansprüche

1. Mobile Kommunikationsvorrichtung (MKV) (100, 200, 300, 410, 420, 430, 440, 450), die umfasst:
- wenigstens ein Kommunikationsschnittstellenmodul (110, 120, 210, 220), das dafür ausgelegt ist:
- über wenigstens ein Telefonnetzwerk und ein Computernetzwerk zu kommunizieren, und
- eine Mehrzahl von Kommunikationsarten über das Computernetzwerk auszuführen, und
- wenigstens ein Modul (150, 250, 350), das dafür ausgelegt ist:
- eine erste Kommunikationsart der Mehrzahl Kommunikationsarten über das Computernetzwerk zu aktivieren, und
- eine zweite Kommunikationsart der Mehrzahl Kommunikationsarten über das Computernetzwerk zu deaktivieren,
- wobei das wenigstens eine Modul ferner dafür ausgelegt ist, zu bestimmen, ob die zweite Kommunikationsart über das Computernetzwerk zu aktivieren oder zu deaktivieren ist, und zwar, zumindest zum Teil, durch Zugreifen und Analysieren von einen Nutzer und/oder die MKV betreffenden gespeicherten Informationen.

2. Mobile Kommunikationsvorrichtung nach Anspruch 1, wobei das Telefonnetzwerk ein Mobiltelefonnetzwerk (442, 452) ist.

3. Mobile Kommunikationsvorrichtung nach Anspruch 1, wobei das Computernetzwerk das Internet (490) umfasst.

4. Mobile Kommunikationsvorrichtung nach Anspruch 1, wobei die zweite Kommunikationsart das Kommunizieren von Sprachkonversationsinformationen umfasst.

5. Mobile Kommunikationsvorrichtung nach Anspruch 1, wobei
- das wenigstens eine Kommunikationsschnittstellenmodul, das dafür ausgelegt ist, über wenigstens das Telefonnetzwerk und das Computernetzwerk zu kommunizieren, ferner das wenigstens eine Kommunikationsschnittstellenmodul umfasst, das dafür ausgelegt ist, Sprachkonversationsinformationen über wenigstens das Telefonnetzwerk und das Computernetzwerk zu kommunizieren, wobei das Telefonnetzwerk ein Mobiltelefonnetzwerk (442, 452) ist,
- wobei das wenigstens eine Modul dafür ausgelegt ist:
- die Kommunikation von Sprachkonversationsinformationen über das Mobiltelefonnetzwerk zu aktvieren, wobei die zweite Kommunikationsart über das Computernetzwerk den Sprachkonversationsinformationen entspricht, und
- wobei das wenigstens eine Kommunikationsschnittstellenmodul dafür ausgelegt ist, eine andere Informationsart als die Sprachkonversationsinformationen über das Computernetzwerk zu kommunizieren, wobei die erste Kommunikationsart über das Computernetzwerk der anderen Informationsart als den Sprachkonversationsinformationen entspricht.

6. Verfahren zum Steuern einer Alternativkommunikationswegnutzung in einer mobilen Kommunikationsvorrichtung (MKV) (100, 200, 300, 410, 420, 430, 440, 450), wobei die MKV dazu fähig ist, über wenigstens ein Telefonnetzwerk und ein Computernetzwerk zu kommunizieren, die MKV dazu fähig ist, eine Mehrzahl von Kommunikationsarten über das Computernetzwerk auszuführen, wobei das Verfahren umfasst:
- Aktivieren einer ersten Kommunikationsart der Mehrzahl Kommunikationsarten über das Computernetzwerk, und
- Deaktivieren einer zweiten Kommunikationsart der Mehrzahl Kommunikationsarten über das Computernetzwerk,
- wobei das Verfahren ferner das Bestimmen umfasst, ob die zweite Kommunikationsart über das Computernetzwerk zu aktivieren oder zu deaktivieren ist, und zwar, zumindest zum Teil, durch Zugreifen und Analysieren von einen Nutzer und/oder die MKV betreffenden gespeicherten Informationen.

7. Verfahren nach Anspruch 6, wobei die zweite Kommunikationsart das Kommunizieren von Sprachkonversationsinformationen umfasst.

## Revendications

1. Dispositif de communication mobile MCD (100, 200, 300, 410, 420, 430, 440, 450) comprenant:
au moins un module (110, 120, 210, 220) d'interface de communication adapté à :
communiquer sur au moins un réseau téléphonique et un réseau informatique ; et
exécuter une pluralité de types de communication sur le réseau informatique ; et
au moins un module (150, 250, 350) adapté à :
activer un premier type de communication parmi la pluralité de types de communication sur le réseau informatique ; et
désactiver un deuxième type de communication parmi la pluralité de types de communication sur le réseau informatique,
dans lequel l'au moins un module est en outre adapté à déterminer s'il convient d'activer ou de désactiver le deuxième type de communication sur le réseau informatique en, au moins en partie, accédant à et en analysant des informations stockées se rapportant à un utilisateur et/ou au MCD.

2. Dispositif de communication mobile selon la revendication 1, dans lequel le réseau téléphonique est un réseau téléphonique cellulaire (442, 452).

3. Dispositif de communication mobile selon la revendication 1, dans lequel le réseau informatique comprend l'Internet (490).

4. Dispositif de communication mobile selon la revendication 1, dans lequel le deuxième type de communication comprend la communication d'informations de conversation vocale.

5. Dispositif de communication mobile selon la revendication 1, dans lequel ledit
au moins un module d'interface de communication adapté à communiquer sur au moins ledit réseau téléphonique et ledit réseau informatique comprend en outre ledit au moins un module d'interface de communication adapté à communiquer des informations de conversation vocale sur au moins ledit réseau téléphonique et ledit réseau informatique, dans lequel ledit réseau téléphonique est un réseau téléphonique cellulaire (442, 452) ;
ledit au moins un module est adapté à :
activer la communication d'informations de conversation vocale sur le réseau téléphonique cellulaire, dans lequel ledit deuxième type de communication sur le réseau informatique est lesdites informations de conversation vocale ; et
ledit au moins un module d'interface de communication est adapté à communiquer un type d'informations autre que des informations de conversation vocale sur le réseau informatique, dans lequel ledit premier type de communication sur le réseau informatique est ledit type d'informations autre que des informations de conversation vocale.

6. Dans un dispositif de communication mobile MCD (100, 200, 300, 410, 420, 430, 440, 450), le MCD apte à communiquer sur au moins un réseau téléphonique et un réseau informatique, le MCD apte à exécuter une pluralité de types de communication sur le réseau informatique, procédé pour contrôler une utilisation d'une voie de communication alternative, le procédé comprenant :
l'activation d'un premier type de communication parmi la pluralité de types de communication sur le réseau informatique ; et
la désactivation d'un deuxième type de communication parmi la pluralité de types de communication sur le réseau informatique,
dans lequel le procédé comprend en outre la détermination s'il convient d'activer ou de désactiver le deuxième type de communication sur le réseau informatique en, au moins en partie, accédant à et en analysant des informations stockées se rapportant à un utilisateur et/ou au MCD.

7. Procédé selon la revendication 6, dans lequel le deuxième type de communication comprend la communication d'informations de conversation vocale.
